(19) Europäisches Patentamt / European Patent Office / Office européen des brevets

(11) **EP 3 356 780 B1**

(12) **FASCICULE DE BREVET EUROPEEN**

(45) Date de publication et mention de la délivrance du brevet:
**06.09.2023 Bulletin 2023/36**

(21) Numéro de dépôt: **16784235.0**

(22) Date de dépôt: **28.09.2016**

(51) Classification Internationale des Brevets (IPC):
***G01M 3/02*** *(2006.01)*

(52) Classification Coopérative des Brevets (CPC):
**G01M 3/02**

(86) Numéro de dépôt international:
**PCT/FR2016/052464**

(87) Numéro de publication internationale:
**WO 2017/055743 (06.04.2017 Gazette 2017/14)**

(54) **PROCEDE DE DETECTION DE FUITE DANS UN RESEAU DE FLUIDE**

LECK DETEKTION IN EINEM FLÜSSIGEN NETZWERK

LEAK DETECTION METHOD IN A PIPELINE NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2015 FR 1559159**

(43) Date de publication de la demande:
**08.08.2018 Bulletin 2018/32**

(73) Titulaire: **Veolia Environnement 75016 Paris (FR)**

(72) Inventeur: **KACHROUDI, Sofiene 92260 Fontenay-aux-Roses (FR)**

(74) Mandataire: **Cabinet Beau de Loménie 158, rue de l'Université 75340 Paris Cedex 07 (FR)**

(56) Documents cités:
WO-A1-2015/124988   US-A1- 2002 124 633
US-A1- 2005 246 112   US-A1- 2005 246 112

**Description**

DOMAINE DE L'INVENTION

Le présent exposé concerne un procédé de détection de fuite dans un réseau de fluide, permettant de détecter une fuite dans un réseau et de fournir des indices quant à sa nature, son importance et/ou sa localisation.

Un tel procédé peut notamment être utilisé pour détecter et pré-localiser des fuites au sein d'un réseau de distribution d'eau. Toutefois, il pourrait également être utilisé pour des réseaux de gaz, de carburant ou de tout autre type de fluide, liquide ou gazeux. Un tel procédé peut également s'appliquer à différentes tailles de réseaux, depuis des réseaux particuliers ne comportant que quelques noeuds jusqu'à des réseaux de transport à grande échelle.

ETAT DE LA TECHNIQUE ANTERIEURE

En France, les réseaux de distribution d'eau potable présentent des pertes d'environ 20% sur le territoire national avec parfois des pertes pouvant atteindre localement près de 40%. D'autres pays connaissent des situations encore plus préoccupantes avec des pertes pouvant monter localement jusqu'à 60%.

Il est donc primordial de pouvoir détecter les fuites présentes dans un réseau de distribution d'eau. Toutefois, il est souvent difficile d'identifier de telles fuites et surtout de les localiser en vue de leur réparation.

Plusieurs techniques existent à ce jour afin de réaliser une telle détection. Parmi ces dernières, les méthodes d'écoute acoustique et de sectorisation sont les plus utilisées.

Les méthodes d'écoute acoustique visent à écouter localement, à l'aide d'un microphone par exemple, les signaux émis par les fuites au sein des canalisations. Une telle technique est assez efficace mais elle requiert un grand nombre de points d'écoute, c'est-à-dire un grand nombre de capteurs ou, dans le cas d'une configuration mobile, un technicien expert à temps plein se déplaçant le long du réseau, pour parvenir à couvrir tout le réseau. De plus elles sont fortement soumises aux perturbations acoustiques de l'environnement des canalisations, par exemple le trafic routier.

Les méthodes de sectorisation visent quant à elles à sectoriser le réseau en de petites zones isolées et à comparer les débits en entrée et en sortie de chaque zone afin de détecter la présence d'un débit de fuite. Toutefois, une telle méthode n'est pas suffisante à elle-seule puisqu'elle ne permet pas de localiser assez précisément l'emplacement de la fuite ; en outre, une telle méthode ne peut être utilisée sur un réseau maillé.

On connaît également la méthode de détection de fuite assistée par ordinateur présentée par le document US 2005/0246112.

Il existe donc un réel besoin pour un procédé de détection de fuite dans un réseau de fluide, permettant de détecter une fuite dans un réseau et de fournir des indices quant à sa nature, son importance et/ou sa localisation et qui soient dépourvus, au moins en partie, des inconvénients inhérents aux méthodes connues précitées.

PRESENTATION DE L'INVENTION

Le présent exposé concerne un procédé de détection de fuite dans un réseau de fluide équipé d'au moins un ensemble de capteurs disposés en différents points de mesure, comprenant les étapes suivantes : acquisition d'un modèle numérique du réseau ; simulation d'au moins plusieurs scénarios de fuite à l'aide du modèle numérique et calcul pour chaque scénario de fuite d'au moins un paramètre du fluide à chaque point de mesure ; détermination d'une signature de fuite pour chaque scénario de fuite en fonction des paramètres du fluide simulés à chaque point de mesure pour le scénario de fuite considéré ; mesure réelle par l'ensemble de capteurs du réseau d'un jeu de mesures de test incluant au moins un paramètre du fluide à chaque point de mesure du réseau ; détermination d'une signature de l'état du réseau en fonction du jeu de mesures de test ; et comparaison de la signature de l'état du réseau avec chaque signature de fuite et détermination d'une probabilité d'occurrence d'au moins un scénario de fuite.

Grâce à un tel procédé, il est possible de simuler différents scénarios de fuite envisageables, se différenciant par exemple par l'emplacement de la fuite et/ou son débit de fuite, et de constituer une bibliothèque de signatures de fuite chacune représentative de ce que détecteraient les capteurs du réseau si un tel scénario se réalisait réellement.

Dès lors, lorsque la régie en charge du réseau souhaite vérifier si une fuite est apparue dans le réseau depuis l'acquisition du modèle du réseau, elle peut relever les valeurs effectivement mesurées par les capteurs du réseau, constituer ainsi la signature de l'état actuel du réseau, et rechercher quelle signature de fuite ressemble le plus à la signature de l'état actuel du réseau, c'est-à-dire rechercher le scénario dans lequel les capteurs donnent des valeurs simulées les plus proches des valeurs effectivement mesurées.

Ainsi, si le modèle numérique du réseau est correctement calé, c'est-à-dire si sa géométrie et les emplacements des capteurs sont conforme au réseau réel et si les valeurs de consommations à chaque noeud du réseau ainsi que les entrées et sorties de fluide aux frontières du réseau sont correctement estimées, on peut considérer que les scénarios dont les simulations sont les plus proches de l'état réel du réseau font partie des scénarios qui ont la plus grande probabilité de correspondre à la situation réelle rencontrée. A ce sujet, la probabilité ainsi déterminée peut être une probabilité absolue, c'est-à-dire une valeur numérique de probabilité, ou bien une probabilité relative, c'est-à-dire un classement des scénarios les uns par rapport aux autres par ordre de probabilité.

Dès lors, si les scénarios les plus proches prévoient tous une fuite dans une zone donnée du réseau, il est probable qu'une fuite soit effectivement présente dans cette même zone. Un tel procédé permet ainsi de pré-localiser une fuite dans un réseau de fluide. Naturellement, cette identification et cette localisation de la fuite sera obtenue de manière plus ou moins précise selon la qualité du modèle numérique utilisé. Ainsi, en fonction du niveau de précision obtenu, il sera possible de connaitre directement la canalisation touchée ou au moins de restreindre la zone de recherche qui devra faire l'objet de techniques conventionnelles d'écoute par exemple.

A l'inverse, si le scénario le plus proche est un scénario nominal dans lequel aucune fuite n'a été simulée, ou si les scénarios les plus proches semblent pointer vers des zones très différentes, il est probable que le réseau soit en réalité exempt de nouvelle fuite de taille significative.

Ainsi, ce procédé permet de détecter et de pré-localiser une nouvelle fuite dans un réseau de manière simple et rapide. En effet, l'étape la plus longue est la simulation des différents scénarios et la constitution des catalogues de signatures de fuite, or cette étape, qui peut déjà être accomplie en quelques heures seulement, peut en outre n'être réalisée qu'une seule fois à l'initialisation du procédé. L'étape de comparaison de l'état du réseau avec les différents scénarios est pour sa part quasi-instantanée.

En outre, même s'il va de soi que plus le nombre de capteurs utilisés est important plus l'identification de la fuite est précise, ce procédé donne déjà des résultats sensibles avec un nombre réduit de capteurs. Ce procédé peut donc se contenter de capteurs déjà en place, sans qu'il soit nécessaire d'effectuer des travaux de voirie pour rajouter des capteurs. Le coût de ce procédé est donc également réduit.

Dans certains modes de réalisation, le procédé comprend une étape de détermination d'une signature nominale pour un scénario nominal selon lequel aucune fuite n'est présente dans le réseau. Ceci permet de vérifier si la signature de l'état de réseau est proche du scénario nominal et donc de déterminer la probabilité d'absence de nouvelle fuite dans le réseau.

Dans certains modes de réalisation, le procédé comprend une étape de détermination d'une signature de robustesse du modèle numérique du réseau au cours de laquelle on simule au moins un scénario de robustesse, dans lequel on fait varier, en l'absence de fuite, certaines valeurs de consommation à certains noeuds du modèle numérique du réseau, et au cours de laquelle on calcule pour chaque scénario de robustesse au moins un paramètre du fluide à chaque point de mesure. Cette signature de robustesse permet de vérifier si une fuite donnée engendre des perturbations suffisamment importantes dans le réseau pour être distinguées par les capteurs de simples variations normales de consommations au sein du réseau.

Dans certains modes de réalisation, la signature de robustesse est obtenue en comparant les paramètres du fluide calculés pour chaque point de mesure entre chaque scénario de robustesse et le scénario nominal. On détermine ainsi pour chaque point de mesure l'écart à la situation nominale, et de préférence l'écart relatif, à partir duquel un tel écart est révélateur d'un évènement plus important qu'une simple variation normale de consommation, c'est-à-dire possiblement révélateur d'une fuite. En outre, pour un point de mesure donné, on retient de préférence la moyenne des valeurs obtenues pour chacun des scénarios de robustesse.

Dans certains modes de réalisation, la signature d'une fuite est déterminée en comparant les paramètres du fluide calculés pour chaque point de mesure entre le scénario de fuite considéré et le scénario nominal. On détermine ainsi pour chaque point de mesure l'écart à la situation nominale. De préférence, on détermine l'écart relatif à la situation nominale de manière à donner le même poids à tous les points de mesure quel que soit l'ordre de grandeur du paramètre simulé.

Dans certains modes de réalisation, la signature d'une fuite est déterminée en tenant compte en outre de la signature de robustesse. Par exemple, il est possible de ne prendre en compte que les points de mesure dont l'écart à la situation nominale est supérieur à l'écart consigné dans la signature de robustesse pour ce même point de mesure.

Dans certains modes de réalisation, la signature d'une fuite est déterminée en tenant compte en outre d'une valeur de sensibilité maximum prédéterminée. Cette valeur de sensibilité maximum est un paramètre que l'utilisateur doit spécifier avant le lancement du procédé et qui permet de rendre plus robuste l'identification du scénario le plus proche en évitant de donner un poids trop important à un point de mesure dont le débit de fuite est très largement supérieur au débit nominal de la situation nominale. En effet, de tels points de mesure présentent de forts écarts sont efficaces pour détecter la présence d'une fuite mais rencontrent plus de difficultés pour différencier deux fuites localisées à deux endroits différents : il est donc préférable de plafonner la valeur que peut prendre un tel écart dans la signature de fuite.

Dans certains modes de réalisation, cette valeur de sensibilité maximum est comprise entre 2 et 4, de préférence égale à 3.

Dans certains modes de réalisation, le procédé comprend en outre une étape de mesure réelle par l'ensemble des capteurs du réseau d'un jeu de mesures de référence comprenant au moins un paramètre du fluide à chaque point de mesure du réseau à un moment où il est supposé que le réseau est exempt de fuite. Ceci permet de connaître la situation de référence du réseau en l'absence de fuite et donc de calculer les écarts entre les mesures de test et les mesures de référence.

Dans certains modes de réalisation, la signature de l'état du réseau est déterminée en comparant le jeu de mesures de test au jeu de mesures de référence. On détermine ainsi pour chaque point de mesure l'écart à la situation de référence. De préférence, on détermine l'écart relatif à la situation de référence de manière à donner le même poids à tous les points de mesure quel que soit l'ordre de grandeur du paramètre mesuré.

Dans certains modes de réalisation, la signature de l'état du réseau est déterminée en tenant compte en outre de la signature de robustesse. De manière analogue au cas des signatures de fuite, il est possible de ne prendre en compte que les points de mesure dont l'écart à la situation de référence est supérieur à l'écart consigné dans la signature de robustesse pour ce même point de mesure.

Dans certains modes de réalisation, la signature de l'état du réseau est déterminée en tenant compte en outre d'une valeur de sensibilité maximum prédéterminée. De manière analogue au cas des signatures de fuite, cette valeur de sensibilité maximum permet de rendre plus robuste l'identification du scénario le plus proche. Cette valeur de sensibilité maximum est de préférence la même que celle utilisée pour la détermination des signatures de fuite ; elle pourrait toutefois être différente.

Dans certains modes de réalisation, chaque signature est un vecteur dont chaque composante correspond à un point de mesure différent.

Dans certains modes de réalisation, chaque composante d'une signature de fuite est égale :

- à 0 si l'écart relatif entre la valeur calculée pour le scénario de fuite en question et la valeur nominale du scénario nominal est inférieur à la composante de la signature de robustesse pour ce point de mesure ;
- à la valeur de sensibilité maximum si ledit écart relatif est supérieur à la valeur de sensibilité maximum ; et
- audit écart relatif dans les autres cas.

Dans certains modes de réalisation, chaque composante de la signature de l'état du réseau est égale :

- à 0 si l'écart relatif entre la valeur mesurée pour la situation réelle et la valeur de référence de la situation de référence est inférieur à la composante de la signature de robustesse pour ce point de mesure ;
- à la valeur de sensibilité maximum si ledit écart relatif est supérieur à la valeur de sensibilité maximum ; et
- audit écart relatif dans les autres cas.

Dans certains modes de réalisation, au cours de l'étape de comparaison de la signature de l'état du réseau avec chaque signature de fuite, on calcule la distance de la signature de l'état du réseau par rapport à chaque signature de fuite selon une métrique prédéterminée. Ceci permet d'estimer ou au moins d'ordonner la probabilité de réalisation de chaque scénario.

Dans certains modes de réalisation, la métrique utilisée est la distance euclidienne, la distance de Hamming ou une distance hybride basée sur ces deux dernières. En effet, les inventeurs ont constatés au cours de leurs essais que ces deux types de distance donnaient de bons résultats.

Dans certains modes de réalisation, au cours de l'étape de comparaison, on calcule en outre la distance de l'état du réseau par rapport à la signature nominale. Ceci permet d'estimer la probabilité de réalisation du scénario d'absence de fuite.

Dans certains modes de réalisation, l'ensemble de capteurs comprend des capteurs de débit et/ou de pression. Individuellement, les capteurs de débit sont plus efficaces que les capteurs de pression. Toutefois, les inventeurs ont constaté une complémentarité de ces deux types de capteurs de telle sorte que leur utilisation conjointe offre des résultats particulièrement précis.

Dans certains modes de réalisation, chaque scénario de fuite est caractérisé par une localisation au sein du réseau et/ou un débit de fuite. De préférence, on prévoit une série de scénarios dans lesquels la fuite est tour à tour au niveau de chaque tronçon de canalisation séparant deux noeuds du réseau, chaque localisation de fuite étant simulée avec plusieurs débits de fuite différents.

Dans certains modes de réalisation, on prévoit au moins un scénario comprenant un débit de fuite inférieur à 20 m3/h, de préférence inférieur à 10 m3/h, de préférence encore inférieur à 5 m3/h. Un tel procédé est en effet capable de détecter des fuites dont le débit est faible et inférieur à de telles valeurs.

Dans certains modes de réalisation, l'étape de mesure réelle des mesures de test a lieu la nuit. On bénéficie ainsi de consommations plus faibles au sein du réseau, renforçant ainsi l'importance relative des fuites par rapport aux simples variations normales des consommations au sein du réseau.

Les caractéristiques et avantages précités, ainsi que d'autres, apparaîtront à la lecture de la description détaillée qui suit, d'exemples de réalisation du procédé proposés. Cette description détaillée fait référence aux dessins annexés.

BREVE DESCRIPTION DES DESSINS

Les dessins annexés sont schématiques et visent avant tout à illustrer les principes de l'invention.
Sur ces dessins, d'une figure (FIG) à l'autre, des éléments (ou parties d'élément) identiques sont repérés par les mêmes signes de référence.

La FIG 1 est un plan d'un réseau de distribution d'eau.
La FIG 2 est un schéma représentant les différentes étapes d'un exemple de procédé.

DESCRIPTION DETAILLEE D'EXEMPLE(S) DE REALISATION

Afin de rendre plus concrète l'invention, un exemple de procédé est décrit en détail ci-après, en référence aux dessins annexés. Il est rappelé que l'invention ne se limite pas à cet exemple.

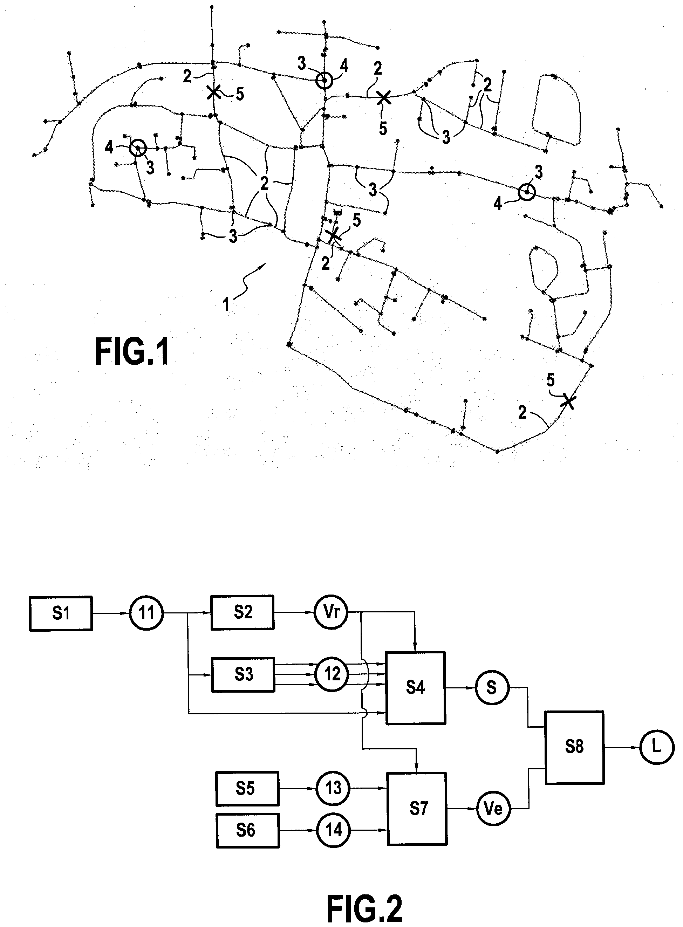

La FIG 1 représente un exemple de réseau de distribution d'eau 1 comprenant une pluralité de tronçons de conduites 2 reliant une pluralité de noeuds 3. Les noeuds 3 sont ainsi des points d'embranchement entre plusieurs tronçons de conduites 2 du réseau de distribution et/ou des points de consommation au niveau desquels sont branchés un ou plusieurs consommateurs.
Le réseau 1 comprend en outre n capteurs de pression 4, au nombre de trois en l'espèce, disposés au niveau de certains noeuds 3, ainsi que m capteurs de débit 5, au nombre de quatre en l'espèce, disposés au niveau de certains tronçons de canalisation 2. Chaque capteur de pression 4 permet ainsi de mesurer la pression régnant au niveau du noeud 3 sur lequel il est prévu. Chaque capteur de débit 5 permet pour sa part de mesurer le débit passant par le tronçon de canalisation 2 sur lequel il est prévu.
La FIG 2 représente pour sa part l'organisation générale d'un exemple de procédé de détection de fuite. Au cours d'une première étape 51, on acquiert un modèle numérique 11 du réseau de distribution 1. On peut pour cela utiliser un modèle préexistant, éventuellement complété et/ou corrigé, ou bien construire un modèle complet pour les besoins du procédé.
Un tel modèle 11 comprend notamment la géométrie du réseau 1 avec l'emplacement des noeuds 3, l'emplacement, le diamètre et la longueur des différents tronçons de canalisation 2, l'emplacement et la nature des capteurs 4 et 5, les consommations à chaque pas de temps constatées ou évaluées à chaque noeuds 3, de préférence en fonction du jour et/ou de la plage horaire étudiée, et les débits entrants/sortants aux frontières du réseau 1, à l'interface par exemple avec un réseau de transport et/ou des réseaux de distribution voisin. Ce modèle 11 peut également comprendre les rugosités des canalisations, les paramètres d'éventuelles pompes, ainsi que toute autre information permettant d'améliorer la précision du modèle.
Sur la base de ce modèle 11, on simule ensuite dans une deuxième étape S2 différents scénarios de robustesse dans lesquels on fait varier dans le modèle 11 les consommations au niveau de certains noeuds 3, de manière aléatoire tout en restant naturellement dans les plages possibles compte tenu des branchements de ces noeuds. On calcule alors pour chaque scénario de robustesse k les valeurs de pression $P_{i,k}$ et de débit $Q_{i,k}$ qui seraient observées dans un tel cas par chaque capteur 4, 5 , c'est-à-dire à chaque point de mesure i, et on construit le vecteur $(P_{i,k} ; Q_{i,k})$. On construit ensuite un vecteur $(P_{i,rob} ; Q_{i,rob})$ qui est la moyenne arithmétique de tous les vecteurs $(P_{i,k} ; Q_{i,k})$.
On construit alors une signature de robustesse Vr qui est un vecteur dont chaque composante correspond à un point de mesure i et qui est construit de la manière suivante :

$$\begin{cases} Vr(i) = \dfrac{P_{i,rob} - P_{i,nom}}{P_{i,nom}} \; ; & si\ i\ est\ un\ capteur\ de\ pression \\[2mm] Vr(i) = \dfrac{Q_{i,rob} - Q_{i,nom}}{Q_{i,nom}} \; ; & si\ i\ est\ un\ capteur\ de\ débit \end{cases}$$

où $P_{i,nom}$ et $Q_{i,nom}$ sont les valeurs de pression et de débit nominales telles qu'observées par les capteurs de pression 4 et de débit 5 dans le modèle numérique original 11, c'est-à-dire dans un scénario nominal.
Sur la base du modèle 11, on simule ensuite dans une troisième étape S3 différents scénarios de fuite 12. Dans cet exemple, cette étape S3 génère un scénario de fuite pour chaque tronçon de canalisation 2 et chaque débit de fuite envisagé. Par exemple, si le réseau 1 comporte p tronçons de canalisation 2 et que l'on souhaite détecter les fuites dont le débit varie de 2 à 24 m3/h avec un pas de 1 m3/h, c'est-à-dire q = 23 débits de fuite différents, on simulera p.q scénarios de fuite différents. Naturellement, il est possible de choisir un nombre de débits plus ou moins important ou des valeurs différentes en fonction du niveau de précision souhaité et des spécificités du réseau étudié.
En pratique, pour chaque scénario de fuite j, on ajoute un point de consommation du débit de fuite considéré sur le tronçon de canalisation 2 considéré et on calcule les valeurs de pression Pi,j et de débit Qi,j qui seraient observées dans un tel cas à chaque point de mesure i, c'est à dire par chaque capteur 4, 5.

Au cours d'une quatrième étape S4, on construit une signature de fuite brute V'j pour chaque scénario de fuite j : cette signature de fuite brute V'j est un vecteur dont chaque composante correspond à un point de mesure i, donc à un capteur 4, 5, et qui est construit de la manière suivante :

$$\begin{cases} V'j(i) = \dfrac{Pi,j - Pi,nom}{Pi,nom} \; ; & \text{si } i \text{ est un capteur de pression} \\[2mm] Vr(i) = \dfrac{Qi,j - Qi,nom}{Qi,nom} \; ; & \text{si } i \text{ est un capteur de débit} \end{cases}$$

On construit ensuite une signature de fuite ajustée Vj pour chaque scénario de fuite j de la manière suivante :

$$\begin{cases} Vj(i) = 0 & si\ V'j(i) < Vr(i); \\ Vj(i) = V'j(i) & si\ Vr(i) \le V'j(i) \le Smax \\ Vj(i) = Smax & si\ Smax < V'j(i) \end{cases}$$

où Smax, valeur de sensibilité maximale, est une constante choisie au préalable.

On peut alors obtenir une matrice de sensibilité 5 en juxtaposant toutes les signatures de fuites ainsi obtenues de sorte que S(i,j)=Vj(i).

Une fois la matrice de sensibilité 5 obtenue, constituant en quelque sorte une bibliothèque de toutes les signatures de fuite Vj envisagées, on effectue au cours d'une cinquième étape S5 un relevé des valeurs réelles mesurées par les capteurs 4 et 5 à un moment où il est supposé que le réseau est exempt de fuite. Ce relevé est en outre effectué de préférence dans des circonstances correspondant à celles utilisées lors des simulations numériques, c'est-à-dire durant une plage horaire et un jour analogue. On constitue ainsi un jeu de mesures de référence 13, comprenant les valeurs de pression Pi,ref et de débit Qi,ref mesurées à chaque point de mesure i par les capteurs 4, 5.

Lorsque l'on souhaite vérifier si le réseau 1 comprend une fuite, on effectue au cours d'une sixième étape S6 un relevé des valeurs réelles mesurées par les capteurs 4 et 5 de manière à constituer un jeu de mesures de test 14, comprenant les valeurs de pression Pi,test et de débit Qi,test mesurées à chaque point de mesure i par les capteurs 4, 5. Ici encore, ce relevé est effectué de préférence dans des circonstances correspondant à celles utilisées lors des simulations numériques.

On construit alors dans une septième étape S7 une signature brute de l'état de réseau : cette signature brute de l'état du réseau V'e est un vecteur dont chaque composante correspond à un point de mesure i, donc à un capteur 4, 5, et qui est construit de la manière suivante :

$$\begin{cases} V'e(i) = \dfrac{Pi,test - Pi,ref}{Pi,ref} \; ; & \text{si } i \text{ est un capteur de pression} \\[2mm] V'e(i) = \dfrac{Qi,test - Qi,ref}{Qi,ref} \; ; & \text{si } i \text{ est un capteur de débit} \end{cases}$$

On construit ensuite une signature ajustée de l'état du réseau Ve de la manière suivante :

$$\begin{cases} Ve(i) = 0 & si\ V'e(i) < Vr(i); \\ Ve(i) = V'j(i) & si\ Vr(i) \le V'e(i) \le Smax \\ Ve(i) = Smax & si\ Smax < V'e(i) \end{cases}$$

Au cours d'une huitième étape S8, on calcule la distance, euclidienne dans cet exemple, entre la signature ajustée de l'état du réseau Ve et chacune des colonnes de la matrice sensibilité S, c'est-à-dire chacune des signatures ajustées de fuite Vj. On calcule également la distance entre la signature ajustée de l'état du réseau Ve et la signature nominale, c'est-à-dire le vecteur nul.

On dresse alors une liste L des scénarios les plus probables en classant ces derniers par ordre décroissant de distance à l'état ajusté du réseau. En étudiant la répartition des scénarios présents en tête de liste, il est alors possible d'obtenir des indices sur la présence d'une fuite ainsi que sur sa localisation et son débit de fuite. En particulier, lorsque plusieurs scénarios en tête de liste pointent vers un même tronçon de canalisation 2 ou au moins vers une même zone du réseau 1, il est possible d'envoyer un technicien sur place pour localiser plus précisément la fuite ainsi détectée. A l'inverse, lorsque le scénario nominal est présent parmi les premiers scénarios de la liste et/ou que les scénarios en tête de liste pointent dans des directions très différentes, on pourra en conclure que le réseau est probablement exempt de fuite.

Dans le présent exemple, les composantes des signatures de fuite et signature de l'état du réseau se fondaient sur des valeurs instantanées de pression Pi ou de débit Qi à un instant donné. Toutefois, il va de soi qu'il est également possible de suivre de telle valeurs au cours du temps de manière à lisser d'éventuelles variations transitoires, augmentant dès lors la fiabilité du procédé.

Dans un tel cas, il suffit de moyenner au cours du temps les écarts de pression ou de débit simulés ou mesurés par rapport aux valeurs nominales ou de référence selon le cas. Ainsi, les signatures de robustesse, de fuite et d'état du réseau peuvent alors s'écrire :

$$\begin{cases} Vr(i) = \dfrac{\int_{t0}^{tfin}\big(Pi,rob(t) - Pi,nom(t)\big).dt}{\int_{t0}^{tfin} Pi,nom(t).dt} \; ; & si\ i\ est\ un\ capteur\ de\ pression \\[4ex] Vr(i) = \dfrac{\int_{t0}^{tfin}\big(Qi,rob(t) - Qi,nom(t)\big).dt}{\int_{t0}^{tfin} Qi,nom(t).dt} \; ; & si\ i\ est\ un\ capteur\ de\ débit \end{cases}$$

$$\begin{cases} V'j(i) = \dfrac{\int_{t0}^{tfin}\big(Pi,j(t) - Pi,nom(t)\big).dt}{\int_{t0}^{tfin} Pi,nom(t).dt} \; ; & si\ i\ est\ un\ capteur\ de\ pression \\[4ex] V'j(i) = \dfrac{\int_{t0}^{tfin}\big(Qi,j(t) - Qi,nom(t)\big).dt}{\int_{t0}^{tfin} Qi,nom(t).dt} \; ; & si\ i\ est\ un\ capteur\ de\ débit \end{cases}$$

$$\begin{cases} V'e(i) = \dfrac{\int_{t0}^{tfin}\big(Pi,test(t) - Pi,ref(t)\big).dt}{\int_{t0}^{tfin} Pi,ref(t).dt} \; ; & si\ i\ est\ un\ capteur\ de\ pression \\[4ex] V'e(i) = \dfrac{\int_{t0}^{tfin}\big(Qi,test(t) - Qi,ref(t)\big).dt}{\int_{t0}^{tfin} Qi,ref(t).dt} \; ; & si\ i\ est\ un\ capteur\ de\ débit \end{cases}$$

avec t0 et tfin le début et la fin de la période étudiée, respectivement.

Ainsi, il est possible de se baser sur une période d'au moins 1h, 4h par exemple, réalisée la nuit. Un tel procédé, ou au moins les étapes S6 à S8, peut alors être répété toutes les nuits afin de détecter l'apparition d'une fuite dans le réseau 1. Il est également possible de prévoir une période d'étude plus longue et s'étendant sur plusieurs jours de manière continue ou discontinue.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention telle que définie par les revendications. H

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

**Revendications**

1. Procédé de détection de fuite dans un réseau de fluide (1) équipé d'au moins un ensemble de capteurs (4, 5) disposés en différents points de mesure, comprenant les étapes suivantes :

   acquisition (51) d'un modèle numérique (11) du réseau (1) ;
   simulation (S3) d'au moins plusieurs scénarios de fuite (12) à l'aide du modèle numérique (11) et calcul pour chaque scénario de fuite (12) d'au moins un paramètre du fluide à chaque point de mesure ;
   détermination (S4) d'une signature de fuite (S) pour chaque scénario de fuite (12) en fonction des paramètres du fluide simulés à chaque point de mesure pour le scénario de fuite (12) considéré et constitution d'une bibliothèque de signatures de fuite (S) chacune représentative de ce que détecteraient les capteurs (4, 5) du réseau (1) si un tel scénario de fuite (12) se réalisait réellement ;
   mesure réelle (S6) par l'ensemble de capteurs (4, 5) du réseau (1) d'un jeu de mesures de test (14) incluant au moins un paramètre du fluide à chaque point de mesure du réseau (1) ;
   détermination (S7) d'une signature de l'état du réseau (Ve) en fonction du jeu de mesures de test (14) ; et
   comparaison (S8) de la signature de l'état du réseau (Ve) avec chaque signature de fuite (S) de la bibliothèque de signatures de fuite (S) et détermination d'une probabilité d'occurrence d'au moins un scénario de fuite (12).

2. Procédé selon la revendication 1, comprenant une étape de détermination d'une signature nominale pour un scénario nominal selon lequel aucune fuite n'est présente dans le réseau (1).

3. Procédé selon la revendication 2, comprenant une étape de détermination (S2) d'une signature de robustesse (Vr) du modèle numérique (11) du réseau (1) au cours de laquelle on simule au moins un scénario de robustesse, dans lequel on fait varier, en l'absence de fuite, certaines valeurs de consommation à certains noeuds (3) du modèle numérique (11) du réseau (1), et au cours de laquelle on calcule pour chaque scénario de robustesse au moins un paramètre du fluide à chaque point de mesure.

4. Procédé selon la revendication 3, dans lequel la signature de robustesse (Vr) est obtenue en comparant les paramètres du fluide calculés pour chaque point de mesure entre chaque scénario de robustesse et le scénario nominal.

5. Procédé selon l'une quelconque des revendications 2 à 4, dans lequel la signature d'une fuite est déterminée en comparant les paramètres du fluide calculés pour chaque point de mesure entre le scénario de fuite (12) considéré et le scénario nominal.

6. Procédé selon la revendication 3 et l'une quelconque des revendications 1 à 5, dans lequel la signature d'une fuite (S) est déterminée en tenant compte en outre de la signature de robustesse (Vr).

7. Procédé selon l'une quelconque des revendications 1 à 6, comprenant en outre une étape de mesure réelle (S5) par l'ensemble de capteurs (4, 5) du réseau (1) d'un jeu de mesures de référence (13) comprenant au moins un paramètre du fluide à chaque point de mesure du réseau à un moment où il est supposé que le réseau (1) est exempt de fuite.

8. Procédé selon la revendication 7, dans lequel la signature de l'état du réseau (Ve) est déterminée en comparant le jeu de mesures de test (14) au jeu de mesures de référence (13).

9. Procédé selon la revendication 3 et l'une quelconque des revendications 1 à 8, dans lequel la signature de l'état du réseau (Ve) est déterminée en tenant compte en outre de la signature de robustesse (Vr).

10. Procédé selon l'une quelconque des revendications 1 à 9, dans lequel chaque signature est un vecteur dont chaque composante correspond à un point de mesure différent.

11. Procédé selon la revendication 10, dans lequel, au cours de l'étape de comparaison (S8) de la signature de l'état du réseau (Ve) avec chaque signature de fuite (S), on calcule la distance de la signature de l'état du réseau (Ve) par rapport à chaque signature de fuite (S) selon une métrique prédéterminée.

12. Procédé selon l'une quelconque des revendications 1 à 11, dans lequel l'ensemble de capteurs comprend des capteurs de débit (5) et/ou de pression (4).

**13.** Procédé selon l'une quelconque des revendications 1 à 12, dans lequel chaque scénario de fuite (12) est **caractérisé par** une localisation au sein du réseau (1) et/ou un débit de fuite.

**Patentansprüche**

**1.** Verfahren zur Erkennung von Leckagen in einem Fluidnetzwerk (1), das mit zumindest einer Anordnung von Sonden (4, 5) ausgestattet ist, die an unterschiedlichen Messpunkten angeordnet sind, umfassend die folgenden Schritte:

Erfassung (S1) eines digitalen Modells (11) des Netzwerks (1),
Simulation (S3) von zumindest mehreren Leckage-Szenarien (12) mithilfe des digitalen Modells (11) und Berechnung zumindest eines Parameters des Fluids an jedem Messpunkt für jedes Leckage-Szenario (12),
Bestimmung (S4) einer Leckage-Signatur (S) für jedes Leckage-Szenario (12) als eine Funktion der simulierten Parameter des Fluids an jedem Messpunkt für das in Betracht stehende Leckage-Szenario (12) und Erstellung einer Bibliothek von Leckage-Signaturen (S), die jeweils das repräsentieren, was die Sonden (4, 5) des Netzwerks (1) erfassen würden, wenn ein solches Leckage-Szenario (12) sich tatsächlich verwirklichen würde,
tatsächliche Messung (S6), durch die Anordnung von Sonden (4, 5) des Netzwerks (1), eines Satzes von Testmessungen (14), die zumindest einen Parameter des Fluids an jedem Messpunkt des Netzwerks (1) beinhalten,
Bestimmung (S7) einer Signatur für den Zustand des Netzwerks (Ve) als Funktion des Satzes von Testmessungen (14), und
Vergleich (S8) der Signatur für den Zustand des Netzwerks (Ve) mit jeder Leckage-Signatur (S) der Bibliothek von Leckage-Signaturen (S) und Bestimmung einer Wahrscheinlichkeit des Auftretens zumindest eines Leckage-Szenarios (12).

**2.** Verfahren nach Anspruch 1, umfassend einen Schritt der Bestimmung einer nominalen Signatur für ein nominales Szenario, gemäß welchem keine Leckage in dem Netzwerk (1) vorliegt.

**3.** Verfahren nach Anspruch 2, umfassend einen Schritt der Bestimmung (S2) einer Robustheits-Signatur (Vr) des digitalen Modells (11) des Netzwerks (1), in dessen Verlauf zumindest ein Robustheits-Szenario simuliert wird, bei welchem bei Fehlen einer Leckage bestimmte Verbrauchswerte an bestimmten Knoten (3) des digitalen Modells (11) des Netzwerks (1) variiert werden, und in dessen Verlauf für jedes Robustheits-Szenario zumindest ein Parameter des Fluids an jedem Messpunkt berechnet wird.

**4.** Verfahren nach Anspruch 3, wobei die Robustheits-Signatur (Vr) durch Vergleichen der für jeden Messpunkt berechneten Parameter des Fluids zwischen jedem Robustheits-Szenario und dem nominalen Szenario erhalten wird.

**5.** Verfahren nach einem der Ansprüche 2 bis 4, wobei die Signatur einer Leckage durch Vergleichen der für jeden Messpunkt berechneten Parameter des Fluids zwischen dem in Betracht stehenden Leckage-Szenario (12) und dem nominalen Szenario bestimmt wird.

**6.** Verfahren nach Anspruch 3 und einem der Ansprüche 1 bis 5, wobei die Signatur einer Leckage (S) bestimmt wird, indem ferner die Robustheits-Signatur (Vr) berücksichtigt wird.

**7.** Verfahren nach einem der Ansprüche 1 bis 6, umfassend ferner einen Schritt der tatsächlichen Messung (S5), durch die Anordnung von Sonden (4, 5) des Netzwerks (1), eines Satzes von Referenz-Messungen (13) umfassend zumindest einen Parameter des Fluids an jedem Messpunkt des Netzwerks in einem Augenblick, in dem angenommen wird, dass das Netzwerk (1) frei von Leckagen ist.

**8.** Verfahren nach Anspruch 7, wobei die Signatur für den Zustand des Netzwerks (Ve) durch Vergleichen des Satzes von Testmessungen (14) mit dem Satz von Referenz-Messungen (13) bestimmt wird.

**9.** Verfahren nach Anspruch 3 und einem der Ansprüche 1 bis 8, wobei die Signatur für den Zustand des Netzwerks (Ve) bestimmt wird, indem ferner die Robustheits-Signatur (Vr) berücksichtigt wird.

**10.** Verfahren nach einem der Ansprüche 1 bis 9, wobei jede Signatur ein Vektor ist, dessen Komponenten jeweils einem unterschiedlichen Messpunkt entsprechen.

**11.** Verfahren nach Anspruch 10, wobei im Verlauf des Schritts des Vergleichs (S8) der Signatur für den Zustand des Netzwerks (Ve) mit jeder Leckage-Signatur (S) der Abstand der Signatur für den Zustand des Netzwerks (Ve) in Bezug auf jede Leckage-Signatur (S) gemäß einer vorbestimmten Metrik berechnet wird.

**12.** Verfahren nach einem der Ansprüche 1 bis 11, wobei die Anordnung von Sonden Sonden für den Durchsatz (5) und/oder den Druck (4) umfasst.

**13.** Verfahren nach einem der Ansprüche 1 bis 12, wobei jedes Leckage-Szenario (12) durch eine Stelle innerhalb des Netzwerks (1) und/oder einen LeckageDurchsatz gekennzeichnet ist.

**Claims**

**1.** A method for detecting a leak in a fluid network (1) equipped with at least one set of sensors (4, 5) disposed at different measuring points, comprising the following steps:

acquiring (S1) a digital model (11) of the network (1);
simulating (S3) at least several leak scenarios (12) using the digital model (11) and calculating for each leak scenario (12) at least one parameter of the fluid at each measuring point;
determining (S4) a leak signature (S) for each leak scenario (12) as a function of the parameters of the fluid simulated at each measuring point for the considered leak scenario (12) and constituting a library of leak signatures (S) each representative of what the sensors (4, 5) of the network (1) would detect if such a leak scenario (12) actually occurred;
actually measuring (S6) by the set of sensors (4, 5) of the network (1) a set of test measurements (14) including at least one parameter of the fluid at each measuring point of the network (1);
determining (S7) a signature of the state of the network (Ve) as a function of the set of test measurements (14); and
comparing (S8) the signature of the state of the network (Ve) with each leak signature (S) of the library of leak signatures (S) and determining a probability of occurrence of at least one leak scenario (12).

**2.** The method according to claim 1, comprising a step of determining a nominal signature for a nominal scenario according to which no leak is present in the network (1).

**3.** The method according to claim 2, comprising a step of determining (S2) a robustness signature (Vr) of the digital model (11) of the network (1) during which at least one robustness scenario is simulated, in which, in the absence of leaks, some consumption values are varied at some nodes (3) of the digital model (11) of the network (1), and during which, for each robustness scenario, at least one parameter of the fluid is calculated at each measuring point.

**4.** The method according to claim 3, wherein the robustness signature (Vr) is obtained by comparing the parameters of the fluid calculated for each measuring point between each robustness scenario and the nominal scenario.

**5.** The method according to any one of claims 2 to 4, wherein the signature of a leak is determined by comparing the parameters of the fluid calculated for each measuring point between the considered leak scenario (12) and the nominal scenario.

**6.** The method according to claim 3 and any one of claims 1 to 5, wherein the signature of a leak (S) is determined by also taking into account the robustness signature (Vr).

**7.** The method according to any one of claims 1 to 6, further comprising a step of actually measuring (S5) by the set of sensors (4, 5) of the network (1) a set of reference measurements (13) comprising at least one parameter of the fluid at each measuring point of the network at a time when it is assumed that the network (1) is leak-free.

**8.** The method according to claim 7, wherein the signature of the state of the network (Ve) is determined by comparing the set of test measurements (14) with the set of reference measurements (13).

**9.** The method according to claim 3 and any one of claims 1 to 8, wherein the signature of the state of the network (Ve) is determined by further taking into account the robustness signature (Vr).

**10.** The method according to any one of claims 1 to 9, wherein each signature is a vector whose each component corresponds to a different measuring point.

11. The method according to claim 10, wherein, during the step of comparing (S8) the signature of the state of the network (Ve) with each leak signature (S), the distance of the signature of the state of the network (Ve) is calculated with respect to each leak signature (S) according to a predetermined metric.

12. The method according to any one of claims 1 to 11, wherein the set of sensors comprises flow rate (5) and/or pressure (4) sensors.

13. The method according to any one of claims 1 to 12, wherein each leak scenario (12) is **characterized by** a location within the network (1) and/or a leak flow rate.

**FIG.1**

**FIG.2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050246112 A